# FASCICULE DE BREVET EUROPEEN

(11) **EP 1 938 010 B1**
(45) Date de publication et mention de la délivrance du brevet: **11.08.2010**
(21) Numéro de dépôt: 06808198.3
(22) Date de dépôt: 25.09.2006
(51) Int. Cl.: F16K 39/06

(54) **ROBINET À OBTURATEUR TOURNANT SPHÉRIQUE**
WASSERHAHN MIT KUGELFÖRMIGEM DREHVERSCHLUSS
FAUCET WITH SPHERICAL ROTATING CLOSURE

(30) Priorité: 29.09.2005 FR 0509949
(43) Date de publication de la demande: 02.07.2008
(73) Titulaire: Vanatome, 26240 Saint Vallier (FR)
(72) Inventeur: ARTRU, Patrick, F-07340 Peaugres (FR)
(74) Mandataire: Maureau, Philippe
(86) Numéro de dépôt international: PCT/FR2006/002182
(87) Numéro de publication internationale: WO 2007/036629

(56) Documents cités:
- DE-A1- 3 824 919
- FR-A- 2 330 932
- FR-A- 2 646 488
- JP-A- 1 015 575
- JP-A- 1 169 179
- JP-A- 3 084 269

## Description

La présente invention concerne un robinet à obturateur tournant sphérique.

Un tel robinet comprend classiquement un corps dans lequel est ménagé un canal, ainsi qu'un obturateur sphérique qui, monté dans le corps de façon pivotante autour d'un axe perpendiculaire à l'axe du canal, comporte un orifice traversant permettant le passage de fluide entre une conduite amont et une conduite aval, en position ouverte. En outre, un siège amont est généralement monté dans le canal du corps en amont de l'obturateur, de façon mobile en translation le long de l'axe du canal du corps. Le siège amont est destiné à assurer l'étanchéité du robinet en position fermée, en étant plaqué contre l'obturateur.

On connaît d'une part des robinets utilisés à de hautes pressions, comme illustré dans les documents FR 2 564 558 et FR 2 646 488. Dans ce cas, l'essentiel de l'appui du siège amont contre l'obturateur résulte de la pression exercée par le fluide en amont. Afin d'éviter le frottement de l'obturateur contre le siège amont pendant la manoeuvre en rotation de l'obturateur, et ainsi de faciliter l'ouverture du robinet, ces documents prévoient des moyens d'équilibrage de la pression de part et d'autre du siège amont, préalablement à l'ouverture du robinet. En outre, les robinets décrits dans ces documents peuvent comporter des ressorts tendant à éloigner le siège amont de l'obturateur. La force de ces ressorts est contrée par la haute pression du fluide en position fermée et étanche du robinet, mais, après équilibrage des pressions entre l'amont et l'aval du siège amont, ces ressorts permettent un recul du siège amont par rapport à l'obturateur.

Toutefois, ces robinets ne sont pas adaptés aux utilisations à de basses ou moyennes pressions car dans ce cas, le placage du siège amont contre l'obturateur par la seule pression de la conduite amont est insuffisant pour assurer une étanchéité satisfaisante du robinet en position fermée. La réalisation de cette étanchéité est également contrariée par la présence des ressorts tendant à éloigner le siège amont de l'obturateur.

On connaît d'autre part des robinets utilisés à de basses ou moyennes pressions. Dans un tel robinet, illustré par exemple dans le document JP 01 015575, il est nécessaire de prévoir des moyens élastiques sollicitant le siège amont vers l'obturateur et le plaquant contre ce dernier, afin de réaliser une étanchéité satisfaisante en l'absence d'une pression de fluide suffisante en amont. A l'ouverture, le siège amont reste plaqué contre l'obturateur par les moyens élastiques. Le document JP 01 015575 prévoit de munir le siège amont de galets coopérant avec des évidements ménagés sur l'obturateur. En conséquence, les frottements entre le siège amont et l'obturateur sont limités, et l'ouverture du robinet en est facilitée. On évite ainsi de gripper, voire d'endommager le robinet.

Toutefois, le robinet proposé par le document JP 01 015575 ne pourrait pas fonctionner à de hautes pressions. En effet, dans ce cas, l'effort exercé par le fluide en amont serait si important que le placage du siège amont contre l'obturateur empêcherait de tourner l'obturateur, et ce même en ayant prévu des galets.

La présente invention vise à remédier aux inconvénients mentionnés ci-dessus, en fournissant un robinet utilisable dans toute la gamme de pressions (basses, moyennes et hautes pressions), qui présente une étanchéité améliorée tout en étant facilement manoeuvrable sans risque de grippage.

A cet effet, l'invention concerne un robinet selon la revendication 1.

Ainsi, en position fermée, le siège amont est dans sa position la plus en aval puisque le bossage est logé dans l'évidement. L'étanchéité est assurée par l'action des moyens élastiques et par la pression du fluide en amont (l'importance relative de ces deux forces dépendant le la pression d'utilisation du robinet), qui tendent à plaquer le siège amont contre l'obturateur.

Lorsque l'obturateur est pivoté vers sa position d'ouverture, on réalise dans un premier temps un équilibrage des pressions entre l'amont et l'aval du siège. Ainsi, l'effort de placage du siège amont contre l'obturateur ne résulte plus que de la force des moyens élastiques. Lorsque le pivotement de l'obturateur est poursuivi, le bossage sort de l'évidement, ce qui entraîne le recul du siège amont par rapport à l'obturateur, c'est-à-dire son déplacement vers l'amont. En conséquence, les frottements entre le siège amont et l'obturateur sont très limités et l'ouverture du robinet en est facilitée.

Le bossage peut être formé d'un galet monté rotatif autour d'un axe solidaire du siège amont et sensiblement parallèle à l'axe de pivotement de l'obturateur, et/ou être ménagé sur une couronne fixée sur la partie aval du siège amont, de façon sensiblement centrée sur l'axe du canal du corps. En variante, le siège amont lui-même forme couronne.

L'obturateur comprend un deuxième évidement situé sensiblement à la même distance du plan orthogonal à l'axe de pivotement de l'obturateur passant par l'axe de l'orifice traversant que le premier évidement, ledit deuxième évidement étant agencé pour coopérer avec le bossage lorsque l'obturateur est en position ouverte. Ainsi, en position ouverte, le siège amont est dans sa position la plus en aval puisque le bossage est logé dans l'évidement.

Selon une réalisation possible, l'obturateur comporte au moins deux ensembles comprenant chacun un premier évidement ou un premier et un deuxième évidements, les deux ensembles étant sensiblement symétriques l'un de l'autre par rapport au plan orthogonal à l'axe de pivotement de l'obturateur passant par l'axe de l'orifice traversant et le siège amont comporte deux bossages sensiblement symétriques par rapport à l'axe du canal du corps et situés sur une ligne sensiblement parallèle à l'axe de pivotement de l'obturateur, de sorte que chaque bossage puisse coopérer avec le ou les évidements de l'un des deux ensembles. Cette disposition symétrique permet d'obtenir un recul du siège amont parallèlement à l'axe du canal du corps en évitant une mise « en travers » du siège amont dans ce canal, qui pourrait conduire à l'apparition de frottements sur l'obturateur lors du pivotement de ce dernier.

En outre, l'obturateur peut comprendre au moins deux ensembles comprenant chacun un premier évidement ou un premier et un deuxième évidements, les deux ensembles étant sensiblement symétriques l'un de l'autre par rapport à l'axe de pivotement de l'obturateur. Ceci permet d'obtenir un robinet « bidirectionnel », les évidements d'un ensemble coopérant avec un bossage ménagé sur le siège aval.

L'obturateur peut ainsi comporter quatre ensembles d'un ou deux évidements chacun (du côté amont / du côté aval et de part et d'autre de l'axe du canal du corps).

Avantageusement, le siège amont comprend plusieurs portions annulaires successives de l'amont vers l'aval, dont les dimensions sont choisies pour que, du fait de la pression de fluide en amont et en aval du siège amont :
- en position fermée des moyens d'équilibrage de la pression, le siège amont soit plaqué contre l'obturateur, assurant ainsi l'étanchéité du robinet ;
- en position ouverte des moyens d'équilibrage de la pression, il s'exerce sur le siège amont un effort de poussée à l'encontre des moyens élastiques.

Les moyens d'équilibrage de la pression de fluide entre l'amont et l'aval du siège amont comprennent par exemple :
- une chambre annulaire amont dont la paroi aval est formée par un épaulement ménagé sur le siège amont et tourné vers l'amont et une chambre annulaire aval située entre le siège amont et l'obturateur, ne communiquant pas avec le passage central du siège amont lorsque le robinet est en position fermée et étanche ;
- un conduit ménagé dans le corps, comportant une première portion reliée à la chambre annulaire amont par un canal et une deuxième portion en communication avec la chambre annulaire aval ;
- des moyens d'obstruction du passage entre la première et la deuxième portions du conduit, logés dans ledit conduit et mobiles en translation le long de l'axe du conduit, lesdits moyens d'obstruction étant sollicités vers la position de fermeture dudit passage par des moyens élastiques et présentant une face d'appui qui, dans la position de fermeture dudit passage, est située à l'extérieur du conduit, du côté de la deuxième portion de ce dernier ;
- une came qui, ménagée sur le corps entre lesdits moyens d'obstruction et une tige d'actionnement du pivotement de l'obturateur sensiblement coaxiale à l'axe de pivotement dudit obturateur, est apte, lorsque ladite tige d'actionnement est manoeuvrée en rotation, à provoquer, par coopération avec la face d'appui, le déplacement des moyens d'obstruction dans le conduit, à l'encontre de la force exercée par les moyens élastiques et la pression, vers une position de libération du passage entre la première et la deuxième portions du conduit.

Selon une réalisation possible, l'axe du conduit est sensiblement orthogonal à l'axe de pivotement de l'obturateur et la came comporte une pièce située en regard de la face d'appui des moyens d'obstruction, dont une première extrémité est fixée au corps du robinet (ou au chapeau solidaire du corps) de façon pivotante autour d'un axe sensiblement parallèle à l'axe de pivotement de l'obturateur, et dont une deuxième extrémité comporte un bossage en saillie vers la tige d'actionnement de l'obturateur, ledit bossage étant agencé pour coopérer, lorsque le robinet est en position fermée et étanche, avec une cavité ménagée dans la tige d'actionnement.

On décrit à présent, à titre d'exemple non limitatif, une forme de réalisation possible de l'invention, en référence aux figures annexées :
La figure 1 est une vue partielle en coupe longitudinale d'un robinet selon l'invention, en position ouverte ;
La figure 2 est une vue de face de la couronne portant les galets et montée sur le siège amont du robinet de la figure 1 ;
La figure 3 est une en coupe du robinet, selon la ligne AA de la figure 1, montrant les moyens d'équilibrage de la pression de fluide ;
La figure 4a est une vue en coupe des moyens d'équilibrage, selon la ligne BB de la figure 3, lorsque le robinet est en position fermée et étanche ;
La figure 4b est une vue agrandie d'un détail de la figure 1, montrant en partie le siège amont, la couronne, les galets et l'obturateur, lorsque le robinet est en position fermée et étanche ;
La figure 4c est une vue de dessus de la couronne et de l'obturateur, lorsque le robinet est en position fermée et étanche ;
La figure 5 est une vue similaire à la figure 4a, le robinet étant en position d'équilibrage de pression, et l'obturateur en position fermée ;
Les figures 6a, 6b et 6c sont des vues similaires aux figures 4a, 4b et 4c, respectivement, le robinet étant en position intermédiaire d'ouverture ; et
Les figures 7a, 7b et 7c sont des vues similaires aux figures 4a, 4b et 4c, respectivement, le robinet étant en position ouverte.

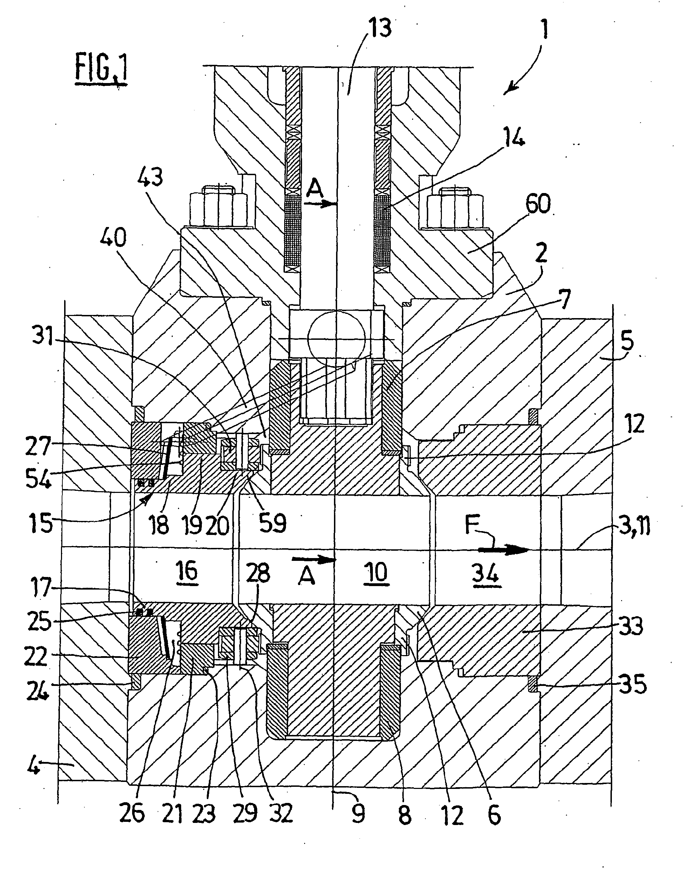

La figure 1 représente un robinet 1 comprenant un corps 2 dans lequel est ménagé un canal d'axe 3. Le corps 2 est destiné à être raccordé à une conduite amont au moyen d'une bride amont 4 et à une conduite aval au moyen d'une bride aval 5. Le fluide véhiculé par les conduites s'écoule selon le sens indiqué par la flèche F, sens par rapport auquel sont définis les termes « amont » et « aval ».

D'autres variantes de corps sont possibles, et notamment une version dans laquelle le corps est directement raccordé aux conduites amont et aval sans l'utilisation de brides. Le montage et le démontage des éléments internes est alors effectué par le haut du corps.

Le robinet 1 comprend également un obturateur 6 tournant monté dans le corps 2, par l'intermédiaire de paliers 7, 8, de façon pivotante autour d'un axe 9 sensiblement perpendiculaire à l'axe 3. L'obturateur 6 présente une partie principale sphérique comportant un orifice traversant 10 cylindrique d'axe 11, l'axe 11 étant situé dans le plan orthogonal à l'axe de pivotement 9 de l'obturateur 6 passant par l'axe 3 du canal du corps 2. La partie principale sphérique de l'obturateur 6 est prolongée par deux parties cylindriques 12 d'axe sensiblement confondu avec l'axe de pivotement 9 de l'obturateur 6, s'étendant chacune d'un côté de la partie principale sphérique.

A l'obturateur 6 est associée une tige d'actionnement 13, sensiblement coaxiale à l'axe de pivotement 9, qui traverse le corps 2 avec interposition de garnitures d'étanchéité 14. La tige d'actionnement 13 est prolongée par un levier extérieur (non représenté) qui permet à un utilisateur de déplacer l'obturateur 6 entre :
- une position ouverte, dans laquelle l'axe 11 de l'orifice 10 et l'axe 3 du canal du corps sont sensiblement confondus, le fluide pouvant alors s'écouler de l'amont vers l'aval ;
- et une position fermée, dans laquelle l'axe 11 de l'orifice 10 forme avec l'axe 3 du canal du corps un angle α de l'ordre de 70° à 80°, par exemple 80°. Bien entendu, l'obturateur 6 est dimensionné pour que, dans cette position, le fluide ne puisse passer de l'amont à l'aval.

Dans chacune des parties cylindriques 12 prolongeant la partie principale sphérique de l'obturateur 6 sont ménagés quatre évidements sensiblement identiques et situés sensiblement à la même distance du plan orthogonal à l'axe de pivotement 9 de l'obturateur 6 passant par l'axe 11 de l'orifice traversant 10 :
- un premier évidement 55 décalé angulairement de l'axe 11 de l'orifice traversant 10 d'un angle α de l'ordre de 70° à 80°, par exemple 80° dans un sens tel que, en position fermée de l'obturateur 6, le premier évidement 55 soit orienté vers l'amont ;
- un deuxième évidement 56 situé sensiblement dans le plan formé par l'axe de pivotement 9 de l'obturateur 6 et l'axe 11 de l'orifice traversant 10 ;
- un troisième évidement 57 sensiblement symétrique du premier évidement 55 par rapport à l'axe de pivotement 9 de l'obturateur 6 ;
- et un quatrième évidement 58 sensiblement symétrique du deuxième évidement 56 par rapport à l'axe de pivotement 9 de l'obturateur 6.

Les évidements présentent par exemple une forme semi cylindrique d'axe sensiblement parallèle à l'axe de pivotement 9 de l'obturateur 6. Par ailleurs, les quatre évidements ménagés dans l'une des parties cylindriques 12 et les quatre évidements ménagés dans l'autre des parties cylindriques 12 sont sensiblement symétriques les uns des autres par rapport au plan orthogonal à l'axe de pivotement 9 de l'obturateur 6 passant par l'axe 11 de l'orifice traversant 10 de l'obturateur 6.

Un siège amont 15 présentant un passage central 16 est monté sensiblement coaxialement dans le canal du corps 2 en amont de l'obturateur 6, de façon mobile en translation le long de l'axe 3, selon une amplitude limitée.

De l'amont vers l'aval, le siège amont 15 comporte une première portion annulaire 17, une deuxième portion annulaire 18 de diamètre extérieur plus important, définissant une surface de butée, une troisième portion annulaire 19 de diamètre extérieur encore plus important, puis une quatrième portion annulaire 20 de diamètre extérieur inférieur à celui de la troisième portion annulaire 19. Ces quatre portions annulaires présentent sensiblement le même diamètre intérieur, de sorte que le passage central 16 est sensiblement cylindrique.

Le siège amont 15 comporte enfin, le plus en aval, une cinquième portion annulaire 59 (délimitant la portée d'étanchéité du siège amont 15) dont le diamètre extérieur est inférieur au diamètre extérieur de la troisième portion annulaire 19 (et ici sensiblement égal au diamètre extérieur de la quatrième portion annulaire 20) et dont le diamètre intérieur est supérieur au diamètre extérieur de la première portion annulaire 17. L'intérêt du choix de ces dimensions est expliqué plus loin.

Le siège amont 15 est monté dans le corps 2 au moyen d'un élément de guidage 21 annulaire, placé entre la troisième portion annulaire 19 et le corps 2, et d'un élément de fermeture 22 annulaire placé entre la première portion annulaire 17 et le corps 2. Des joints 23, 24 sont interposés entre le corps 2 et l'élément de guidage 21, respectivement l'élément de fermeture 22. En outre, des segments 25 sont placés entre l'élément de fermeture 22 et le siège amont 15, un faible jeu radial étant ménagé entre ces deux pièces.

Entre l'élément de fermeture 22, l'élément de guidage 21 et le siège amont 15 est définie une chambre annulaire amont 26, qui est en communication fluidique limitée avec le passage central 16 du siège amont 15 via les segments 25 et le jeu radial précités. Dans la chambre annulaire amont 26 est placée une rondelle ressort 27 prenant appui d'une part sur la surface de butée formée entre les première et deuxième portions annulaires 17, 18 du siège amont 15 et d'autre part sur une surface de butée ménagée sur l'élément de fermeture 22. La rondelle 27 sollicite ainsi le siège amont 15 vers l'obturateur 6, ce qui a pour effet de plaquer l'extrémité aval 28 du siège amont 15 contre l'obturateur 6, et, en conséquence, d'assurer l'étanchéité du robinet 1 en position fermée de l'obturateur 6. Une membrane métallique 54 est en outre disposée dans la chambre annulaire amont 26 contre la face aval de cette chambre, une extrémité de la membrane 54 étant fixée à l'élément de guidage 21 et l'autre extrémité étant fixée au siège amont 15. La membrane 54 assure l'étanchéité entre le siège amont 15 et le corps 2 lorsque le robinet est en position fermée et étanche.

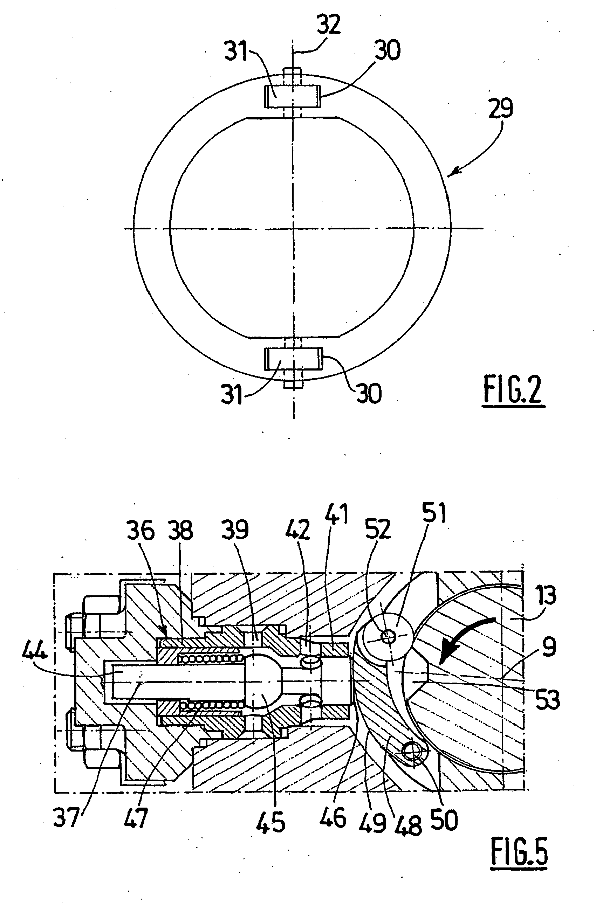

Une couronne 29 est montée sur la quatrième portion annulaire 20 du siège amont 15, dans le canal du corps 2. La couronne 29, illustrée sur la figure 2, comprend deux logements 30 sensiblement parallélépipédiques, diamétralement opposés, dans chacun desquels est monté un galet 31, de façon rotative autour d'un même axe 32 joignant sensiblement les centres des deux logements 30. La couronne 29 est montée sur le siège amont 15 de sorte que l'axe 32 soit sensiblement parallèle à l'axe de pivotement 9 de l'obturateur 6 et soit sécant avec l'axe 3 du canal du corps 2. Les galets 31 sont alors disposés chacun en regard d'une partie cylindrique 12 de l'obturateur 6, au même niveau axial que les évidements 55, 56, 57, 58, et sont en saillie vers l'obturateur 6 par rapport à l'extrémité aval 28 du siège amont 15.

En outre, un faux siège aval 33 comportant un passage central 34 est monté à l'intérieur du canal du corps 2, du côté aval de l'obturateur 6, avec interposition d'un joint 35 pour assurer la continuité entre le passage central 16, l'orifice 10 et le passage central 34. En variante, le faux siège aval 33 pourrait présenter une structure similaire à celle du siège amont 15, notamment pour l'utilisation du robinet 1 dans les deux sens de circulation du fluide (sens de la flèche F et sens opposé). Dans le cas d'un robinet bidirectionnel, chacun des deux sièges « amont » et « aval » est de préférence équipé, en plus de la membrane 54, d'une contre-membrane qui intervient, pendant les phases d'équilibrage, pour protéger la membrane associée au siège du côté « aval » contre l'effet de pression inverse, qu'une membrane simple ne pourrait pas supporter.

En position ouverte du robinet 1, la veine fluide amont, le passage central 16 du siège amont 15, l'orifice traversant 10 de l'obturateur 6, le passage central 34 du faux siège aval 33 et la veine fluide aval sont sensiblement coaxiaux et de sections voisines.

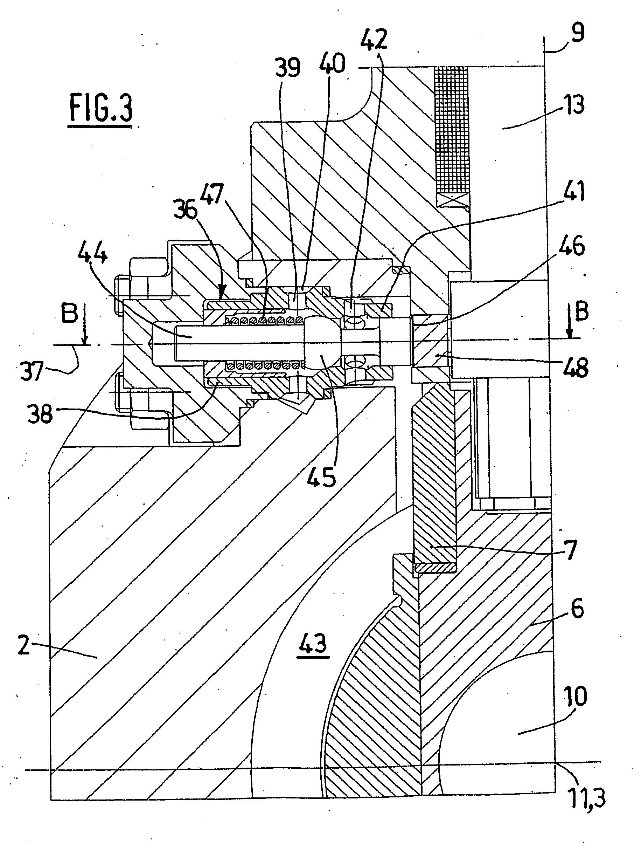

Enfin, comme illustré sur les figures 1 et 3, le robinet 1 comprend des moyens d'équilibrage de la pression entre l'amont et l'aval du siège amont 15, préalablement à l'ouverture du robinet 1, ces moyens formant un circuit de by-pass.

Les moyens d'équilibrage comprennent tout d'abord un conduit 36 cylindrique, d'axe 37, ménagé dans le corps 2 sensiblement orthogonalement à l'axe de pivotement 9 de l'obturateur 6 et à l'axe 3 du canal du corps 2. Le conduit 36 comprend une première portion 38 présentant des orifices radiaux 39 débouchant dans un canal 40 percé dans le corps 2 de façon oblique à partir de la chambre annulaire amont 26. Le conduit 36 comprend également une deuxième portion 41 prolongeant la première portion 38 en direction de la tige d'actionnement 13, et dont le diamètre est plus faible que celui de la première portion 38. La deuxième portion 41 présente des orifices radiaux 42 débouchant dans le volume central recevant l'obturateur 6, ce volume formant, en position fermée et étanche du robinet 1, une chambre annulaire aval 43 située entre le siège amont 15 et l'obturateur 6 et ne communiquant pas avec le passage central 16 du siège amont 15.

A l'intérieur du conduit 36 est disposé sensiblement axialement un poussoir 44 comportant une bille 45 de diamètre suffisant pour pouvoir obstruer le passage entre la première portion 38 et la deuxième portion 41, au niveau du rétrécissement de section. Le poussoir 44 se prolonge au-delà de la bille 45 jusqu'à son extrémité libre formant une face d'appui 46 située en regard de la tige d'actionnement 13. Un ressort 47 est monté dans le conduit 36, autour du poussoir 44. Le poussoir 44 est mobile en translation le long de l'axe 37 entre :
- une position de fermeture, vers laquelle le poussoir 44 est sollicité par le ressort 47. Dans cette position de fermeture, la bille 45 obstrue le passage entre la première portion 38 et la deuxième portion 41 du conduit 36, le fluide ne pouvant alors pas passer de la chambre annulaire amont 26 à la chambre annulaire aval 43. En outre, le poussoir 44 fait saillie du conduit 36 du côté de la tige d'actionnement 13, la face d'appui 46 étant donc située à l'extérieur du conduit 36 ;
- et une position de libération, dans laquelle le poussoir 44 s'est éloigné de la tige d'actionnement 13. Le ressort 47 est alors comprimé et la face d'appui 46 est à proximité de l'extrémité de la deuxième portion 41 tournée vers la tige d'actionnement 13. Dans cette position, le passage entre la première portion 38 et la deuxième portion 41 du conduit 36 n'est plus obstrué par la bille 45, les chambres annulaires amont 26 et aval 43 étant donc en communication fluidique.

Les moyens d'équilibrage de la pression comprennent par ailleurs une came 48 formée d'une pièce incurvée liée au chapeau 60, lui-même fixé au corps 2 du robinet 1 et dont la face extérieure 49 bombée est disposée en regard de la face d'appui 46 du poussoir 44. La came 48 comprend une première extrémité fixée au chapeau 60 de façon rotative autour d'un axe 50 sensiblement parallèle à l'axe de pivotement 9 de l'obturateur 6 et une deuxième extrémité à laquelle est fixée un galet 51, de façon rotative autour d'un axe 52 sensiblement parallèle à l'axe 50. La galet 51 est agencé pour coopérer, lorsque le robinet 1 est en position fermée et étanche, avec une cavité 53 ménagée dans la tige d'actionnement 13. La cavité 53 est écartée angulairement de l'axe 37 du conduit 36 d'un angle 13 de l'ordre de 20°.

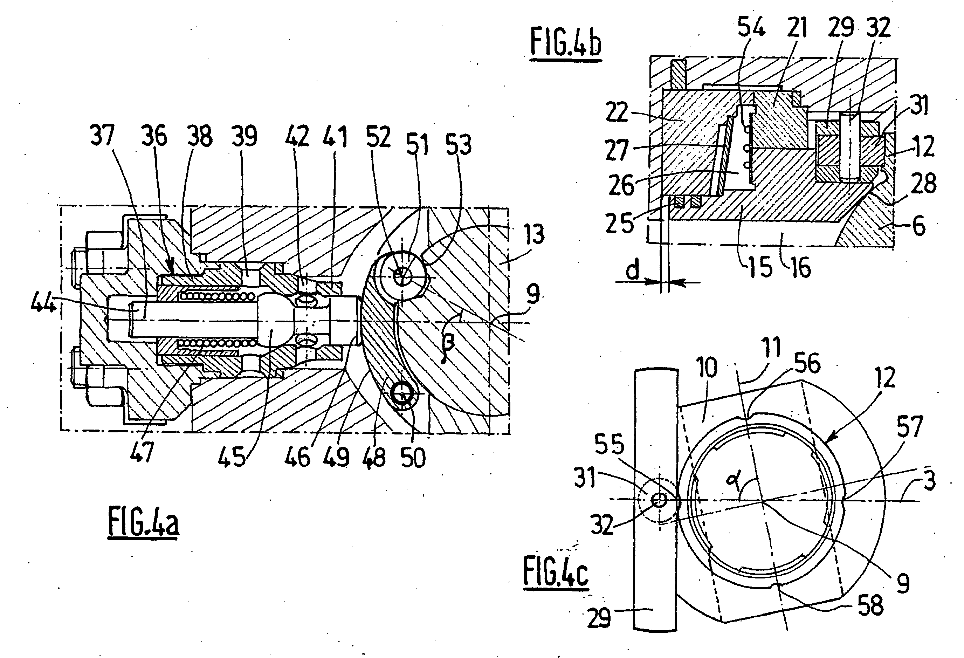

Lorsque le robinet 1 est en position fermée et étanche (figures 4a, 4b, 4c), l'obturateur 6 est disposé de sorte que l'axe 11 de son orifice traversant 10 forme avec l'axe 3 du canal du corps 2 un angle α de l'ordre de 80°. Le galet 31 de la couronne 29 est alors logé dans le premier évidement 55 ménagé dans l'obturateur 6 (figure 4c). Ainsi, du fait de l'action de la rondelle 27 et de la pression en amont, le siège amont 15 est plaqué contre l'obturateur 6 et la distance d entre la face amont de l'élément de fermeture 22 et la face amont du siège amont est maximale (figure 4b). Le fait que le diamètre extérieur de la cinquième portion annulaire 59 du siège amont 15 est inférieur au diamètre extérieur de la troisième portion annulaire 19 permet de réaliser l'étanchéité du robinet 1 par effet autoclave lorsque le by-pass est fermé. Par ailleurs, le galet 51 de la came 48 est logé dans la tige d'actionnement 13 de l'obturateur 6 et le poussoir 44 est en position de fermeture (figure 4a).

Lorsqu'un utilisateur agit sur le levier, il provoque le pivotement de la tige d'actionnement 13 autour de l'axe 9. Le début du mouvement de pivotement de la tige d'actionnement 13 (pivotement d'environ 10° à 20°) n'entraîne pas le pivotement de l'obturateur 6 en raison du jeu. L'obturateur 6 reste donc en position fermée, comme sur la figure 4c. En revanche, ce pivotement a pour conséquence la sortie du galet 51 de la came 48 hors de la cavité 53 (figure 5). La came 48 pivote ainsi autour de l'axe 50, entraînant le déplacement du poussoir 44 à l'opposé de la tige d'actionnement 13, ce qui libère le passage entre les première et deuxième portions 38, 41 du conduit 36. Le fluide peut alors passer de la chambre annulaire amont 26 à la chambre annulaire aval 43. Il y a ainsi équilibrage des pressions de part et d'autre du siège amont 15 via le circuit de by-pass. Le siège amont 15 n'est alors plus poussé vers l'obturateur 6 que par l'action de la rondelle 27. Le robinet 1 est en position d'équilibrage de pression, et l'obturateur 6 est toujours en position fermée. Mais, du fait que le diamètre intérieur de la cinquième portion annulaire 59 du siège amont 15 est supérieur au diamètre extérieur de la première portion annulaire 17, il existe un effort antagoniste à l'effort exercé par la rondelle 27 qui a pour effet de diminuer, voire de supprimer, l'action de cette rondelle 27, et donc de diminuer les frottements lors de l'ouverture du robinet 1.

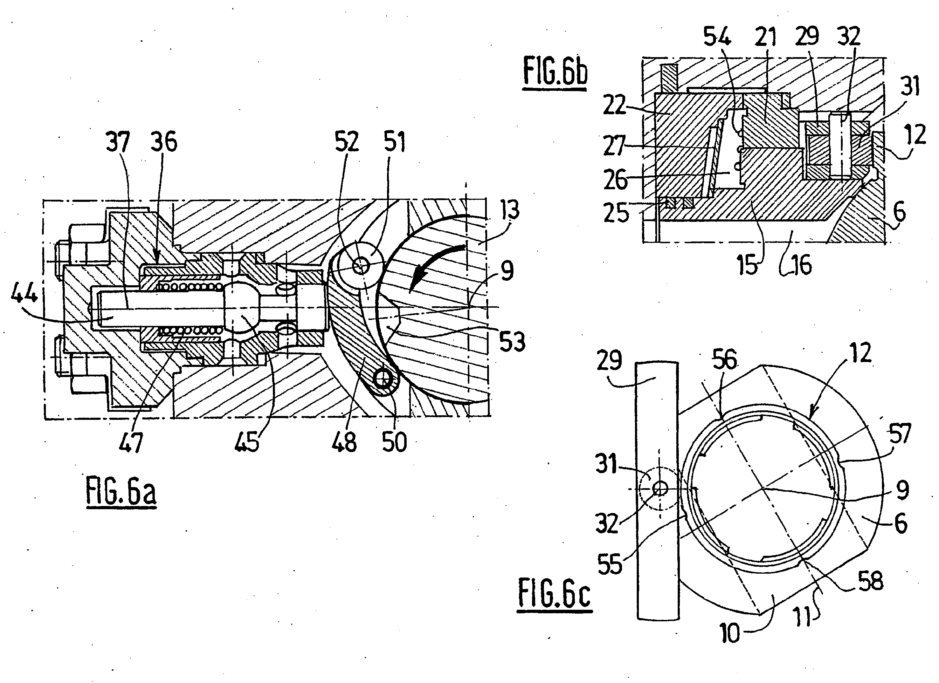

La poursuite du mouvement de pivotement du levier, et donc de la tige d'actionnement 13, entraîne le pivotement de l'obturateur 6, alors que l'effort de poussée exercé par le siège amont 15 en raison de la pression amont a été supprimé. Lorsque l'obturateur 6 pivote autour de l'axe 9, le galet 31 de la couronne 29 quitte le premier évidement 55 pour venir rouler contre la face latérale de la portion cylindrique 12 de l'obturateur 6. Il s'ensuit un mouvement de recul du siège amont 15 par rapport à l'axe 9, à l'encontre de la force exercée par la rondelle 27. La distance d entre la face amont de l'élément de fermeture 22 et la face amont du siège amont est alors minimale. Le pivotement de l'obturateur 6 est ainsi facilité par le fait que les frottements contre le siège amont 15 sont grandement diminués, car localisés uniquement au niveau du galet 31 et non sur l'ensemble de la surface de contact entre le siège amont 15 et la partie sphérique de l'obturateur 6. Le robinet 1 est en position intermédiaire d'ouverture (figures 6a, 6b, 6c).

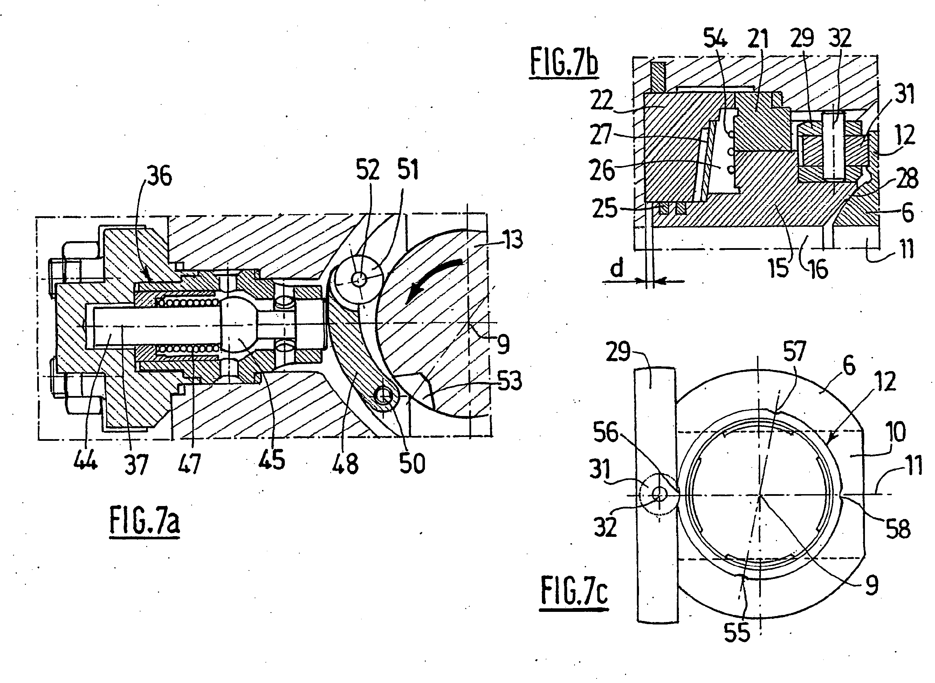

En position d'ouverture (figure 7a, 7b, 7c), le galet 31 de la couronne 29 est logé dans le deuxième évidement 56, le siège amont 15 étant donc à nouveau avancé vers l'obturateur 6 et plaqué contre celui-ci (distance d maximale). L'angle de rotation de l'obturateur 6 est limité à une valeur comprise entre 70° et 80° de sorte que la rotation totale du levier reste de 90° : ainsi, l'invention peut être utilisée avec des actionneurs standard (pneumatiques, électriques ou hydrauliques). Le circuit de by-pass est quant à lui toujours ouvert.

Lorsqu'on manoeuvre la tige d'actionnement 13 dans le sens de la fermeture, on rattrape tout d'abord le jeu puis on entraîne en rotation l'obturateur 6 autour de l'axe 9, le circuit de by-pass étant toujours ouvert. Lorsque l'obturateur 6 revient en position de fermeture complète, simultanément avec la fin de rotation de la tige d'actionnement 13, le galet 31 de la couronne 29 vient se loger dans le premier évidement 55 (distance d maximale) et le galet 51 de la came 48 vient se loger dans la cavité 53. Le poussoir 44, sous l'effet du ressort 47, se translate vers la tige d'actionnement 13. La bille 45 obture alors le passage entre le chambre annulaire amont 26 et la chambre annulaire aval 43. L'écart de pression entre l'amont et l'aval du siège amont 15 contribue alors à plaquer ce dernier contre l'obturateur 6.

Ainsi, l'invention apporte une amélioration déterminante à la technique antérieure, en fournissant un robinet parfaitement étanche à basse ou moyenne pression et aisément manoeuvrable.

Il va de soi que l'invention n'est pas limitée à la forme de réalisation décrite ci-dessus à titre d'exemple mais qu'elle en embrasse au contraire toutes les variantes de réalisation.

## Revendications

1. Robinet comportant :
- un corps (2) dans lequel est ménagé un canal d'axe (3), destiné à être placé entre une conduite amont et une conduite aval ;
- un obturateur (6) tournant sensiblement sphérique monté dans le corps (2) de façon pivotante autour d'un axe (9) sensiblement perpendiculaire à l'axe (3) du canal, entre une position fermée et une position ouverte, l'obturateur (6) comportant un orifice traversant (10) d'axe (11) destiné à permettre le passage de fluide de la conduite amont à la conduite aval en position ouverte ;
- un siège amont (15) présentant un passage central (16), monté dans le canal du corps (2) en amont de l'obturateur (6), de façon mobile en translation le long de l'axe (3) du canal du corps (2) ;
- des moyens d'équilibrage de la pression de fluide entre l'amont et l'aval du siège amont (15), préalablement à l'ouverture du robinet (1) ;
- des moyens élastiques (27) agencés pour solliciter le siège amont (15) vers l'obturateur (6) ;
**caractérisé en ce qu'**il comprend en outre
- au moins un bossage (31) ménagé sur le siège amont (15) et faisant saillie sensiblement parallèlement à l'axe (3) du canal du corps (2) en direction de l'obturateur (6) et au moins un premier évidement (55, 56) ménagé sur l'obturateur (6), agencé pour coopérer avec le bossage (31) lorsque l'obturateur (6) est en position fermée ;
- un deuxième évidement (56) ménagé sur l'obturateur (6), agencé pour coopérer avec le bossage (31) lorsque l'obturateur (6) est en position ouverte, le deuxième évidement (56) étant situé sensiblement à la même distance du plan orthogonal à l'axe de pivotement (9) de l'obturateur (6) passant par l'axe (11) de l'orifice traversant (10) que le premier évidement (55), ledit deuxième évidement (56) étant situé sensiblement dans le plan formé par l'axe de pivotement (9) de l'obturateur (6) et l'axe (11) de l'orifice traversant (10) de l'obturateur (6), le premier évidement (55) étant angulairement écarté du deuxième évidement (56) d'un angle (α) compris entre 70° et 80°.

2. Robinet selon la revendication 1, **caractérisé en ce que** le bossage est formé d'un galet (31) monté rotatif autour d'un axe (32) solidaire du siège amont (15) et sensiblement parallèle à l'axe de pivotement (9) de l'obturateur (6).

3. Robinet selon la revendication 1 ou 2, **caractérisé en ce que** le bossage (31) est ménagé sur une couronne (29) fixée sur la partie aval du siège amont (15), de façon sensiblement centrée sur l'axe (3) du canal du corps (2), le premier évidement (55) étant ménagé sur une partie cylindrique (12) qui prolonge la partie principale sphérique de l'obturateur (6) et dont l'axe est sensiblement confondu avec l'axe de pivotement (9) de l'obturateur (6).

4. Robinet selon les revendications 2 et 3, **caractérisé en ce que** le galet (31) est disposé dans un logement (30) ménagé dans la couronne (29).

5. Robinet selon l'une des revendications 1 à 4, **caractérisé en ce que** l'obturateur (6) comporte au moins deux ensembles comprenant chacun un premier et un deuxième évidements (55, 56), les deux ensembles étant sensiblement symétriques l'un de l'autre par rapport au plan orthogonal à l'axe de pivotement (9) de l'obturateur (6) passant par l'axe (11) de l'orifice traversant (10) et **en ce que** le siège amont (15) comporte deux bossages (31) sensiblement symétriques par rapport à l'axe (3) du canal du corps (2) et situés sur une ligne sensiblement parallèle à l'axe de pivotement (9) de l'obturateur (6), de sorte que chaque bossage (31) puisse coopérer avec les évidements (55, 56) de l'un des deux ensembles.

6. Robinet selon l'une des revendications 1 à 5, **caractérisé en ce que** l'obturateur (6) comprend au moins deux ensembles comprenant chacun un premier et un deuxième évidements (55, 56, 57, 58), les deux ensembles étant sensiblement symétriques l'un de l'autre par rapport à l'axe de pivotement (9) de l'obturateur (6).

7. Robinet selon l'une des revendications 1 à 6, **caractérisé en ce que** le siège amont (15) comprend plusieurs portions annulaires successives (17, 18, 19, 20, 59) de l'amont vers l'aval, dont les dimensions sont choisies pour que, du fait de la pression de fluide en amont et en aval du siège amont (15) :
- en position fermée des moyens d'équilibrage de la pression, le siège amont (15) soit plaqué contre l'obturateur (6), assurant ainsi l'étanchéité du robinet (1) ;
- en position ouverte des moyens d'équilibrage de la pression, il s'exerce sur le siège amont (15) un effort de poussée à l'encontre des moyens élastiques (27).

8. Robinet selon l'une des revendications 1 à 7, **caractérisé en ce que** les moyens d'équilibrage de la pression comprennent :
- une chambre annulaire amont (26) dont la paroi aval est formée par un épaulement ménagé sur le siège amont (15) et tourné vers l'amont;
- une chambre annulaire aval (43) située entre le siège amont (15) et l'obturateur (6), ne communiquant pas avec le passage central (16) du siège amont (15) lorsque le robinet (1) est en position fermée et étanche ;
- un conduit (36) d'axe (37), ménagé dans le corps (2), comportant une première portion (38) reliée à la chambre annulaire amont (26) par un canal (40) et une deuxième portion (41) en communication avec la chambre annulaire aval (43) ;
- des moyens d'obstruction (44, 45) du passage entre la première et la deuxième portions (38, 41) du conduit (36), logés dans ledit conduit et mobiles en translation le long de l'axe (37) du conduit (37), lesdits moyens d'obstruction étant sollicités vers la position de fermeture dudit passage par des moyens élastiques (47) et présentant une face d'appui (46) qui, dans la position de fermeture dudit passage, est située à l'extérieur du conduit (36), du côté de la deuxième portion (41) de ce dernier ;
- une came (48) qui, ménagée sur le corps (2) entre lesdits moyens d'obstruction et une tige d'actionnement (13) du pivotement de l'obturateur (6) sensiblement coaxiale à l'axe de pivotement (9) dudit obturateur (6), est apte, lorsque ladite tige d'actionnement (13) est manoeuvrée en rotation, à provoquer, par coopération avec la face d'appui (46), le déplacement des moyens d'obstruction dans le conduit (36), à l'encontre de la force exercée par les moyens élastiques (47) et la pression, vers une position de libération du passage entre la première et la deuxième portions (38, 41) du conduit (36).

9. Robinet selon la revendication 8, **caractérisé en ce que** la chambre annulaire amont (26) est en communication fluidique limitée avec le passage central (16) du siège amont (15) par l'intermédiaire d'un jeu radial et de segments (25) disposés entre le siège amont (15) et un élément de fermeture (22) formant la face amont de la chambre annulaire amont (26).

10. Robinet selon la revendication 8 ou 9, **caractérisé en ce que** l'axe (37) du conduit (36) est sensiblement orthogonal à l'axe de pivotement (9) de l'obturateur (6) et **en ce que** la came (48) comporte une pièce située en regard de la face d'appui (46) des moyens d'obstruction, dont une première extrémité est fixée au corps (2) du robinet de façon pivotante autour d'un axe (50) sensiblement parallèle à l'axe de pivotement (9) de l'obturateur (6), et dont une deuxième extrémité comporte un bossage (51) en saillie vers la tige d'actionnement (13) de l'obturateur (6), ledit bossage (51) étant agencé pour coopérer, lorsque le robinet (1) est en position fermée et étanche, avec une cavité (53) ménagée dans la tige d'actionnement (13).

## Claims

1. A cock, comprising:
- a body (2) in which a channel with an axis (3) is made, designed to be placed between an upstream duct and a downstream duct;
- a substantially spherical rotary obturator (6) pivotingly mounted inside the body (2) around an axis (9) substantially perpendicular to the axis (3) of the channel, between a closed position and an open position, the obturator (6) comprising a through orifice (10) with an axis (11) designed to let fluid through from the upstream duct to the downstream duct in the open position;
- an upstream seat (15) having a center passage (16), mounted inside the channel of the body (2) upstream of the obturator (6), in a translationally mobile manner along the axis (3) of the channel of the body (2);
- means for compensating the fluid pressure between the upstream and downstream part of the upstream seat (15), prior to opening of the cock (1);
- elastic means (27) arranged for biasing the upstream seat (15) towards the obturator (6);
**characterized in** further comprising:
- at least one boss (31) made on the upstream seat (15) and protruding substantially in parallel to the axis (3) of the channel of the body (2) in the direction of the obturator (6), and at least one first cutout (55, 56) made on the obturator (6), arranged for cooperating with the boss (31) when the obturator (6) is in the closed position;
- a second cutout (56) made on the obturator (6), arranged for cooperating with the boss (31) when the obturator (6) is in the open position, the second cutout (56) being located substantially at the same distance from the plane orthogonal to the pivoting axis (9) of the obturator (6) going through the axis (11) of the through orifice (10) as the first cutout (55), said second cutout (56) being located substantially in the plane formed by the pivoting axis (9) of the obturator (6) and the axis (11) of the through orifice (10) of the obturator (6), the first cutout (55) being angularly spaced away from the second cutout (56) by an angle (α) between 70° and 80°.

2. The cock according to claim 1, **characterized in that** the boss is formed of a roller (31) rotatingly mounted around an axis (32) integral with the upstream seat (15) and substantially parallel to the pivoting axis (9) of the obturator (6).

3. The cock according to claim 1 or 2, **characterized in that** the boss (31) is made on a crown (29) fastened on the downstream part of the upstream seat (15), while being substantially centered on the axis (3) of the channel of the body (2), the first cutout (55) being made on a cylindrical part (12) extending the spherical main part of the obturator (6), and the axis of which substantially coincides with the pivoting axis (9) of the obturator (6).

4. The cock according to claims 2 and 3, **characterized in that** the roller (31) is arranged inside a housing (30) made in the crown (29).

5. The cock according to any of claims 1 to 4, **characterized in that** the obturator (6) comprises at least two assemblies each comprising a first and a second cutout (55, 56), with both assemblies being substantially symmetrical to the each other with respect to the plane orthogonal to the pivoting axis (9) of the obturator (6) going through the axis (11) of the through orifice (10), and **in that** the upstream seat (15) comprises two bosses (31) substantially symmetrical with respect to the axis (3) of the channel of the body (2) and located on a line substantially parallel to the pivoting axis (9) of the obturator (6), so that each boss (31) may cooperate with the cutouts (55, 56) of one of the two assemblies.

6. The cock according to any of claims 1 to 5, **characterized in that** the obturator (6) comprises at least two assemblies each comprising a first and a second cutout (55, 56, 57, 58), with both assemblies being substantially symmetrical to each other with respect to the pivoting axis (9) of the obturator (6).

7. The cock according to any of claims 1 to 6, **characterized in that** the upstream seat (15) comprises several successive annular portions (17, 18, 19, 20, 59) from the upstream to the downstream part, the dimensions of which are chosen so that, due to the fluid pressure upstream and downstream of the upstream seat (15):
- in the closed position of the pressure compensating means, the upstream seat (15) is pushed against the obturator (6), thereby ensuring sealing of the cock (1);
- in the open position of the pressure compensating means, a thrust force is applied to the upstream seat (15) against the elastic means (27).

8. The cock according to any of claims 1 to 7, **characterized in that** the pressure compensating means comprise:
- an upstream annular chamber (26) the downstream wall of which is formed by a shoulder made on the upstream seat (15) and oriented upstream;
- a downstream annular chamber (43) located between the downstream seat (15) and the obturator (6), not communicating with the center passage (16) of the upstream seat (15) when the cock (1) is in the closed and sealed position;
- a duct (36) with an axis (37), made in the body (2), comprising a first portion (38) connected to the upstream annular chamber (26) by a channel (40), and a second portion (41) communicating with the downstream annular chamber (43);
- means (44, 45) for blocking the passage between the first and second portions (38, 41) of the duct (36), housed inside said duct and translationally mobile along the axis (37) of the duct (36), said blocking means being biased towards the closing position of said passage by elastic means (47) and having a supporting face (46) which, in the closing position of said passage, is located outside of the duct (36), on the side of the second portion (41) thereof;
- a cam (48) which, made on the body (2) between said blocking means and a rod (13) for actuating the pivoting motion of the obturator (6) substantially coaxial with the pivoting axis (9) of said obturator (6), is adapted, when said actuating rod (13) is rotated, to cause, by cooperation with the supporting face (46), the displacement of the blocking means inside the duct (36), against the force applied by the elastic means (47) and the pressure, towards a releasing position of the passage between the first and the second portions (38, 41) of the duct (36).

9. The cock according to claim 8, **characterized in that** the upstream annular chamber (26) is in limited fluid communication with the center passage (16) of the upstream seat (15) via radial play and segments (25) arranged between the upstream seat (15) and a closing element (22) forming the upstream face of the upstream annular chamber (26).

10. The cock according to claim 8 or 9, **characterized in that** the axis (37) of the duct (36) is substantially orthogonal to the pivoting axis (9) of the obturator (6), and **in that** the cam (48) comprises a part located opposite the blocking supporting face (46) of the blocking means, a first end of which is fastened to the body (2) of the cock in a pivoting manner around an axis (50) substantially parallel to the pivoting axis (9) of the obturator (6), and a second end of which comprises a boss (51) protruding towards the actuating rod (13) of the obturator (6), said boss (51) being arranged for cooperating, when the cock (1) is in the closed and sealed position, with a cavity (53) made inside the actuating rod (13).

## Patentansprüche

1. Hahn, umfassend:
- einen Körper (2), in dem ein Kanal mit einer Achse (3) eingerichtet ist, der dazu gedacht ist, zwischen einer vorgeschalteten Leitung und einer nachgeschalteten Leitung angeordnet zu werden;
- einen im Wesentlichen sphärischen Drehverschluss (6), der in dem Körper um eine Achse (9), die zu der Achse (3) des Kanals im Wesentlichen rechtwinklig ist, zwischen einer geschlossenen Position und einer geöffneten Position schwenkbar angebracht ist, wobei der Verschluss (6) eine Durchgangsöffnung (10) mit einer Achse (11) umfasst, die dazu gedacht ist, in der geöffneten Position den Durchgang von Fluid von der vorgeschalteten Leitung in die nachgeschaltete Leitung zu erlauben;
- einen vorgeschalteten Sitz (15), der einen mittleren Durchgang (16) aufweist, der in dem Kanal des Körpers (2) oberhalb des Verschlusses (6) translationsmäßig an der Achse (3) des Kanals des Körpers (2) entlang beweglich angebracht ist;
- Mittel zum Ausgleichen des Fluiddrucks zwischen dem vorgeschalteten und dem nachgeschalteten Teil des vorgeschalteten Sitzes (15), vor dem Öffnen des Hahns (1);
- elastische Mittel (27), die angeordnet sind, um den vorgeschalteten Sitz (15) zum Verschluss (6) hin vorzuspannen;
**dadurch gekennzeichnet, dass** er ferner Folgendes umfasst:
- mindestens eine Erhebung (31), die auf dem vorgeschalteten Sitz (15) eingerichtet ist und im Wesentlichen parallel zur Achse (3) des Kanals des Körpers (2) in Richtung auf den Verschluss (6) vorsteht, und mindestens eine erste Ausnehmung (55, 56), die auf dem Verschluss (6) eingerichtet ist und angeordnet ist, um mit der Erhebung (31) zusammenzuwirken, wenn der Verschluss (6) sich in der geschlossenen Position befindet;
- eine zweite Ausnehmung (56), die auf dem Verschluss (6) eingerichtet ist und angeordnet ist, um mit der Erhebung (31) zusammenzuwirken, wenn der Verschluss (6) sich in der geöffneten Position befindet, wobei die zweite Ausnehmung (56) sich im Wesentlichen von der Ebene, die zu der Schwenkachse (9) des Verschlusses (6) orthogonal ist, die durch die Achse (11) der Durchgangsöffnung (10) geht, in dem gleichen Abstand befindet wie die erste Ausnehmung (55), wobei die zweite Ausnehmung (56) sich im Wesentlichen in der Ebene befindet, die von der Schwenkachse (9) des Verschlusses (6) und der Achse (11) der Durchgangsöffnung (10) des Verschlusses (6) gebildet wird, wobei die erste Ausnehmung (55) winkelmäßig von der ersten Ausnehmung (56) um einen Winkel (α) zwischen 70° und 80° beabstandet ist.

2. Hahn nach Anspruch 1, **dadurch gekennzeichnet, dass** die Erhebung durch eine Rolle (31) gebildet wird, die um eine Achse (32), die mit dem nachgeschalteten Sitz (15) fest verbunden ist und zu der Schwenkachse (9) des Verschlusses (6) im Wesentlichen parallel ist, drehbar angebracht ist.

3. Hahn nach Anspruch 1 oder 2, **dadurch gekennzeichnet, dass** die Erhebung (31) auf einem Kranz (29) eingerichtet ist, der auf dem nachgeschalteten Teil des vorgeschalteten Sitzes (15) befestigt ist, im Wesentlichen um die Achse (3) des Kanals des Körpers (2) zentriert, wobei die erste Ausnehmung (55) auf einem zylindrischen Teil (12) eingerichtet ist, der den sphärischen Hauptteil des Verschlusses (6) verlängert und dessen Achse im Wesentlichen mit der Schwenkachse (9) des Verschlusses (6) zusammenfällt.

4. Hahn nach Anspruch 2 und 3, **dadurch gekennzeichnet, dass** die Rolle (31) in einer Aufnahme (30) angeordnet ist, die in dem Kranz (29) eingerichtet ist.

5. Hahn nach einem der Ansprüche 1 bis 4, **dadurch gekennzeichnet, dass** der Verschluss (6) mindestens zwei Anordnungen umfasst, die jeweils eine erste und eine zweite Ausnehmung (55, 56) umfassen, wobei die beiden Anordnungen im Wesentlichen im Verhältnis zu der Ebene, die zur Schwenkachse (9) des Verschlusses (6) orthogonal ist und durch die Achse (11) der Durchgangsöffnung (10) geht, zueinander symmetrisch sind, und dass der vorgeschaltete Sitz (15) zwei Erhebungen (31) umfasst, die im Verhältnis zu der Achse (3) des Kanals des Körpers (2) im Wesentlichen symmetrisch sind und sich auf einer Linie befinden, die im Wesentlichen parallel zur Schwenkachse (9) des Verschlusses (6) ist, so dass jede Erhebung (31) mit den Ausnehmungen (55, 56) einer der beiden Anordnungen zusammenwirken kann.

6. Hahn nach einem der Ansprüche 1 bis 5, **dadurch gekennzeichnet, dass** der Verschluss (6) mindestens zwei Anordnungen umfasst, die jeweils eine erste und eine zweite Ausnehmung (55, 56, 57, 58) umfassen, wobei die beiden Anordnungen im Verhältnis zu der Schwenkachse (9) des Verschlusses (6) im Wesentlichen zueinander symmetrisch sind.

7. Hahn nach einem der Ansprüche 1 bis 6, **dadurch gekennzeichnet, dass** der vorgeschaltete Sitz (15) mehrere aufeinanderfolgende ringförmige Abschnitte (17, 18, 19, 20, 59) vom vorgeschalteten zum nachgeschalteten Teil umfasst, deren Abmessungen gewählt werden, damit durch den Fluiddruck oberhalb und unterhalb des vorgeschalteten Sitzes (15):
- in der geschlossenen Position der Druckausgleichsmittel der vorgeschaltete Sitz (15) an den Verschluss (6) angedrückt wird und somit die Dichtigkeit des Hahns (1) sicherstellt;
- in der geöffneten Position der Druckausgleichsmittel eine Schubkraft gegen die elastischen Mittel (27) auf den vorgeschalteten Sitz (15) ausgeübt wird.

8. Hahn nach einem der Ansprüche 1 bis 7, **dadurch gekennzeichnet, dass** die Druckausgleichsmittel Folgendes umfassen:
- eine vorgeschaltete ringförmige Kammer (26), deren nachgeschaltete Wand durch einen Ansatz gebildet wird, der auf dem vorgeschalteten Sitz (15) eingerichtet ist und nach oben gerichtet ist;
- eine nachgeschaltete ringförmige Kammer (43), die sich zwischen dem vorgeschalteten Sitz (15) und dem Verschluss (6) befindet, die nicht mit dem mittleren Durchgang (16) des vorgeschalteten Sitzes (15) in Verbindung steht, wenn der Hahn (1) sich in der geschlossenen und dichten Position befindet;
- eine Leitung (36) mit einer Achse (37), die in dem Körper (2) eingerichtet ist, die einen ersten Abschnitt (38) umfasst, der mit der vorgeschalteten ringförmigen Kammer (26) über einen Kanal (40) verbunden ist, und einen zweiten Abschnitt (41), der mit der nachgeschalteten ringförmigen Kammer (43) in Verbindung steht;
- Mittel (44, 45) zum Sperren des Durchgangs zwischen dem ersten und dem zweiten Abschnitt (38, 41) der Leitung (36), die in der Leitung aufgenommen sind und translationsmäßig an der Achse (37) der Leitung (36) entlang bewegbar sind, wobei die Sperrmittel in die Verschlussposition des Durchgangs durch elastische Mittel (47) vorgespannt werden und eine Anlageseite (46) aufweisen, die sich in der Verschlussposition des Durchgangs außerhalb der Leitung (36) auf der Seite des zweiten Abschnitts (41) derselben befindet;
- einen Nocken (48), der, indem er auf dem Körper (2) zwischen den Sperrmitteln und einem Betätigungsstab (13) der Schwenkbewegung des Verschlusses (6), der zur Schwenkachse (9) des Verschlusses (6) im Wesentlichen koaxial ist, eingerichtet ist, dazu geeignet ist, wenn der Betätigungsstab (13) gedreht wird, durch ein Zusammenwirken mit der Anlageseite (46) die Verschiebung der Sperrmittel in der Leitung (36) gegen die Kraft, die von den elastischen Mitteln (47) ausgeübt wird, und den Druck in eine Position zur Freigabe des Durchgangs zwischen den ersten und zweiten Abschnitten (38, 41) der Leitung (36) zu verursachen.

9. Hahn nach Anspruch 8, **dadurch gekennzeichnet, dass** die sich vorgeschaltete ringförmige Kammer (26) über ein Radialspiel und über Segmente (25), die zwischen dem vorgeschalteten Sitz (15) und einem Verschlusselement (22), das die vorgeschaltete Seite der vorgeschalteten ringförmigen Kammer (26) bildet, angeordnet sind, in begrenzter Fluidkommunikation mit dem mittleren Durchgang (16) des vorgeschalteten Sitzes (15) befindet.

10. Hahn nach Anspruch 8 oder 9, **dadurch gekennzeichnet, dass** die Achse (37) der Leitung (36) zur Schwenkachse (9) des Verschlusses (6) im Wesentlichen orthogonal ist, und dass der Nocken (48) ein Teil umfasst, das sich gegenüber der Anlagefläche (46) der Sperrmittel befindet, dessen erstes Ende an dem Körper (2) des Hahns um eine Achse (50), die im Wesentlichen parallel zu der Schwenkachse (9) des Verschlusses (6) ist, schwenkbar befestigt ist, und dessen zweites Ende eine Erhebung (51) umfasst, die in Richtung auf den Betätigungsstab (13) des Verschlusses (6) vorsteht, wobei die Erhebung (51) eingerichtet ist, um, wenn der Hahn (1) sich in der geschlossenen und dichten Position befindet, mit einem Hohlraum (53) zusammenzuwirken, der in dem Betätigungsstab (13) eingerichtet ist.
